# EUROPEAN PATENT APPLICATION

(11) **EP 1 348 733 A1**
(43) Date of publication of application: **01.10.2003**
(21) Application number: 03006597.3
(22) Date of filing: 24.03.2003
(51) Int. Cl.: C08L 23/16, C08K 3/00, F16L 11/04

(54) **Rubber composition and low-contaminative hose produced by using the same**

(30) Priority: 26.03.2002 JP 2002086833
(71) Applicant: Tokai Rubber Industries, Ltd., Komaki-shi, Aichi-ken, 485-8550 (JP)
(72) Inventor: Ikeda, Hidehito, Komaki-shi, Aichi-ken, 485-8550 (JP); Okado, Yoshio, Komaki-shi, Aichi-ken, 485-8550 (JP); Ikemoto, Ayumu, Komaki-shi, Aichi-ken, 485-8550 (JP); Hirai, Ryo, Komaki-shi, Aichi-ken, 485-8550 (JP)
(74) Representative: Frankland, Nigel Howard

(57) **Abstract**

A rubber composition which is low cost and excellent in low ion extraction, electrical resistance and heat resistance. The rubber composition comprises:
(A) an ethylene-propylene rubber;
(B) a peroxide crosslinking agent;
(C) a filler having a laminar crystal structure; and
(D) an epoxy resin:
wherein the filler (C) is present in a proportion of 20 to 130 parts by weight and the epoxy resin (D) is present in a proportion of 1.5 to 15 parts by weight, respectively, based on 100 parts by weight of the ethylene-propylene rubber (A).

## Description

### BACKGROUND OF THE INVENTION

The present invention relates to a rubber composition and a low-contaminative hose produced by using the same rubber composition. More particularly, the invention relates to a rubber composition for use in a transport pipe for a fuel cell system, a cooling liquid-transport pipe for a super computer, a membrane cleaning liquid-transport pipe for an analytical instrument, and a chip or wafer cleaning liquid-transport pipe for semiconductor production, as well as to a low-contaminative hose produced by using the same rubber composition.

### Description of the Art

Due to the problems with environmental pollution, the exhaustion of petroleum resources and the like, an impetus has been gathered in recent years to develop fuel cell-powered vehicles. Generally, electricity generation is performed in a fuel cell with a fuel gas (typically, hydrogen or methanol) supplied to a negative pole, and with air (typically, oxygen) supplied to a positive pole. Unreacted fuel gas and unreacted air unused in the reaction in the fuel cell are put back into the negative pole or the positive pole, respectively. However, in situations where ion extraction occurs in a transport (supply/exhaust) pipe of a fuel gas or air, fluid such as a fuel gas or the like passing through the pipe becomes contaminated by the extracted ions. The fuel cell, therefore, suffers from poor efficiency in electricity generation. As another serious problem resulting from the ion extraction from each transport pipe, the fluid itself such as a fuel gas or the like running through the pipe becomes easily electrically conductive, and therefore, the fuel cell is liable to produce electrical leakage outwardly through the fluid. This electrical leakage is responsible for inefficient electricity generation in the fuel cell and also for generating hazardous electrical shocks to human beings. For this reason, low ion extraction (cleanness) and electrical resistance as well as heat resistance are required for transport pipes for use in the fuel cell system. Currently, a silicone rubber hose, a bellows-shaped SUS pipe or the like is used as transport pipes in such fuel cell systems.

However, there are some problems in the silicone rubber hose or the bellows-shaped SUS pipe as follows.

A problem of silicone rubber for use in the silicone rubber hose is high cost which is five to ten times as high as general-purpose rubber. Especially, silicone rubber which is improved in terms of processability costs much higher. In addition, there is another problem that it is difficult to produce a hose using silicone rubber by a simple extrusion molding used for general-purpose rubber because of the difficult processability and an easy-to-set property of silicone rubber.

The problems of SUS material for use in the bellows-shaped SUS pipe are high specific gravity as well as high cost. Further, there are further problems that processing costs and processing steps are increased for molding into a tube or forming into a bellows-shape because of necessity of a special equipment. Still further, there is a problem of poor flexibility for the SUS material. Even if the flexibility can be improved to some degree by adjustment of its thickness or alteration of its bellows-shape, only narrow discretion may be left in terms of design. Further, flexibility like a rubber hose cannot be obtained.

In view of the foregoing, it is an object of the present invention to provide a rubber composition which is low cost and excellent in low ion extraction, electrical resistance and heat resistance, and to provide a low-contaminative hose produced by using the same.

### SUMMARY OF THE INVENTION

In accordance with the present invention to achieve the aforesaid object, there is provided a rubber composition comprising:
(A) an ethylene-propylene rubber;
(B) a peroxide crosslinking agent;
(C) a filler having a laminar crystal structure; and
(D) an epoxy resin:
wherein the filler (C) is present in a proportion of 20 to 130 parts by weight and the epoxy resin (D) is present in a proportion of 1.5 to 15 parts by weight, respectively, both based on 100 parts by weight of the ethylene-propylene rubber (A).

The present inventors have made intensive studies on rubber compositions as materials for a hose in order to obtain a hose which is low cost and excellent in low ion extraction, electrical resistance and heat resistance. In the studies, an approach has been centered on ethylene-propylene rubber such as an ethylene-propylene-diene terpolymer (EPDM), and it has been found that when such rubber is vulcanized using a peroxide crosslinking agent, the resultant hose is less likely to extract ions, which are eventually mixed into the fluid being passed through the hose. From further studies, it has also been found that when the rubber composition with a peroxide crosslinking agent contains a filler having a laminar crystal structure at a specific ratio, the resultant hose can more reliably alleviate ion extraction with respect to a fluid passing through the hose. This is because the ions may be entrapped between the layers of the above-mentioned laminar crystal structure of the filler. From still further studies, it has also been found that when the rubber composition with a peroxide crosslinking agent contains an epoxy resin at a specific ratio, the resultant hose is remarkably improved in its heat resistance. These findings have led to the present invention. Here, although not entirely understood, the epoxy resin may presumably function as a radical catcher and prevent softening and deterioration caused by cutting the main chains of EPDM (becoming low-molecular).

### DESCRIPTION OF THE PREFERRED EMBODIMENTS

The present invention will now be described in greater detail and with regard to preferred embodiments.

One embodiment of the rubber composition according to the invention may be achieved using an ethylene-propylene rubber (component A), a peroxide crosslinking agent (component B), a filler having a laminar crystal structure (component C), and an epoxy resin (component D). A characteristic feature of the present invention is to use the above filler having a laminar crystal structure (component C) and the above epoxy resin (component D) together, and to have the proportion thereof within specific ratios, respectively.

The ethylene-propylene rubber (component A) is not specifically limited so long as it can be suitably used as a base material for the above mentioned rubber composition. For example, an ethylene-propylene copolymer (EPM) and an ethylene-propylene-diene terpolymer (EPDM) obtained by copolymerizing EPM with a diene monomer (the third ingredient), which may be used alone, or in combination, may be utilized.

No particular limitation is placed on the diene monomer, i.e., the third ingredient, for use in EPDM, but a diene monomer with 5 to 20 carbon atoms is preferred. Specific examples of the diene monomer include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-butylidene-2-norbornene, 2-methallyl-5-norbornene, 2-isopropenyl-5-norbornene and the like. These diene monomers may be used singly, or two or more monomers may be used in combination. Of the diene monomers listed above, it is preferred that dicyclopentadiene (DCP) and 5-ethylidene-2-norbornene (ENB) be used alone or in combination.

The ethylene-propylene rubber (component A) preferably has an ethylene content of 48 to 70 % by weight, more preferably 50 to 60 % by weight. The EPDM preferably has an iodine value of 6 to 30, more preferably 10 to 24. Generally, when a EPDM composition using a peroxide crosslinking agent further includes an antioxidant, there is a tendency that the antioxidant consumes the peroxide crosslinking agent so as to inhibit vulcanization of EPDM. However, when the EPDM having an iodine value within a specific range is used, inhibition of vulcanization due to the antioxidant may preferably be cancelled.

The peroxide crosslinking agent (component B), which is mixed with the ethylene-propylene rubber (component A), is not specifically limited, but examples thereof include 2,4-dichloro-benzoyl peroxide, benzoyl peroxide, 1,1-di-t-butylperoxy-3,3,5-trimethyl-cyclohexane, 2,5-dimethyl-2,5-dibenzoylperoxyhexane, n-butyl-4,4'-di-t-butylperoxy valerate, dicumyl peroxide, t-butylperoxy benzoate, di-t-butylperoxydiisopropylbenzene, t-butylcumyl peroxide, 2,5-dimethyl-2,5-di-t-butylperoxyhexane, di-t-butylperoxide, 2,5-dimethyl-2,5-di-t-butylperoxyhexyne-3 and the like. These peroxides may be used singly, or two or more peroxides may be used in combination. Of the peroxides listed above, dicumyl peroxide is particularly preferred.

The amount of the peroxide crosslinking agent (component B) to be added preferably is in the range of 1 to 10 parts by weight and, more preferably, 3 to 7 parts by weight, based on 100 parts by weight of the ethylene-propylene rubber (component A). The unit, part or parts by weight, is hereinafter referred to as "part" or "parts" for the convenience of explanation. If component B is less than 1 part, sufficient vulcanization is not attained so that the resultant hose tends to be inferior in sealing properties. Conversely, if component B is more than 10 parts, the hose tends to become too hard to achieve adequate hose functions because it has too low an elongation at break, or too high a compression set.

The filler (component C) having a laminar crystal structure, which is mixed with component A and component B, is not specifically limited so long as it has a laminar crystal structure. The filler may include, for example, clay, kaolinite, mica, talc, hydrotalcite and the like. These fillers may be used singly, or two or more fillers may be used in combination. In view of its mechanical properties and molding properties, component C preferably has a mean particle diameter of 0.05 to 20 µm and, more preferably, 0.1 to 10 µm.

The amount of the filler (component C) to be added is in the range of 20 to 130 parts and, preferably, 40 to 110 parts, based on 100 parts of the ethylene-propylene rubber (component A). If component C is less than 20 parts, the resultant rubber composition has a deteriorated electrical resistance, such as volume resistivity, surface resistivity, alternating electrical current (AC) resistance, and electrical conductivity. Conversely, if component C is more than 130 parts, the resultant hose tends to suffer poor resistance to ion extraction relative to a fluid placed in contact with that hose, so that the fluid becomes easily contaminated with the extracted ions, and initial tensile strength at break (TB) deteriorates.

The epoxy resin (component D), which is mixed with the above components A to C, is not specifically limited so long as it has an epoxy group (an oxirane ring) in its molecule. Examples thereof include bisphenol A epoxy resin, novolak epoxy resin, brominated epoxy resin and cycloaliphatic epoxy resin. These resins may be used alone or in combination of two or more.

The amount of the epoxy resin (component D) to be added is in the range of 1.5 to 15 parts and, preferably, 5 to 10 parts, based on 100 parts of the ethylene-propylene rubber (component A). If the component D is less than 1.5 parts, the improvement in heat resistance is not sufficient.
Conversely, if the component D is more than 15 parts, roll moldability deteriorates due to the tackiness of the epoxy resin and Mooney viscosity decreases so as to cause permanent set in extrusion molding.

In addition to the above components A to D, an antioxidant is preferably mixed in a viewpoint of heat resistance. The antioxidant is not specifically limited, but it is preferred that at least one of a quinoline antioxidant and a phenylamine antioxidant is used.

Examples of quinoline antioxidant include trimethyldihydroquinoline, 6-ethoxy-1,2-dihydoro-2,2,4-trimethylquinoline, which may be used alone, or in combination.

Examples of phenylamine antioxidant include phenyl-1-naphthylamine, 4,4'-bis(α,α'-dimethylbenzyl) diphenylamine, p-(p-toluenesulfonamide) diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, N-(1-methylheptyl)-N'-phenyl-p-phenylenediamine and N-phenyl-N'-(3-methacryloyloxy-2-hydroxypropyl)-p-phenylenediamine. These may be used alone or in combination.

The amount of the antioxidant to be added preferably is in the range of 0.5 to 10 parts and, more preferably, 2 to 6 parts, based on 100 parts of the ethylene-propylene rubber (component A). If the antioxidant is less than 0.5 parts, the improvement in heat resistance is small. Conversely, if the antioxidant is more than 10 parts, the antioxidant may consume the peroxide crosslinking agent (component B) and inhibit vulcanization of the ethylene-propylene rubber (component A), resulting in the tendency of deterioration of both compression set and initial tensile strength at break (TB).

To the rubber composition according to the present invention, other components may be added, where desired, which may include another filler such as carbon black, a softener such as paraffinic oil and the like.

The rubber composition can be prepared by mixing components A to D with each other and, when necessary, with antioxidant, and then by kneading the mixture using a kneading machine such as a roll, a kneader, a Banbury mixer or the like. The thus obtained rubber composition may be vulcanized in a specific condition and formed into a specific shape such as a hose or a sheet for a specific application.

The rubber composition of the present invention may suitably be applied to low-contaminative hoses such as transport pipes used in a fuel cell system, transport pipes for cooling liquids used in super computers, as well as for membrane cleaning liquids used in analytical instruments, and to transport pipes for chip or wafer cleaning liquids used in semiconductor production. Further, the rubber composition of the present invention may be used as an engine cooling hose for various vehicles, such as a radiator hose used to connect an engine and a radiator, a heater hose used to connect an engine and a heater core, and other like hoses. Still further, the rubber composition of the present invention may be used as a material for a radiator packing, a heat-resistant rubber vibration insulator and the like.

The low-contaminative hose using the rubber composition according to the present invention can be formed, for example, by extrusion-molding the inventive rubber composition using a mandrel, and thereafter by vulcanizing the whole extrudate in a specific condition, followed by drawing of the mandrel.

The thus obtained low-contaminative hose of the present invention preferably has the following properties.

### Electrical conductivity

As a result of extraction by a solvent (pure water), the electrical conductivity of the solvent (pure water) is not more than 20µS/cm.

### Metal ion concentration

As a result of extraction by a solvent (pure water), the metal ion concentration of the solvent (pure water) is not more than 0.5 ppm.

### Volume resistivity

The volume resistivity is not less than 10⁷Ω · cm.

### Surface resistivity

The surface resistivity is not less than 10⁸Ω.

### Alternating electrical current (AC) resistance

The AC resistance (impedance) is 10⁴ Ω·cm or more on flow of an alternating electrical current of 10⁴ Hz.

The low-contaminative hose thus formed typically has a thickness of about 1.5 to 12 mm depending on the particular use of that hose. The inner diameter of this low-contaminative hose varies with the particular use, but usually ranges from about 5 to 50 mm.

The low-contaminative hose of the present invention is not limited to a single-layer structure comprising the rubber composition of the present invention, but may be a multi-layer structure comprising two or more layers. In such a case, it is preferred that the innermost layer comprises the rubber composition of the present invention.

The following examples are given to further illustrate the present invention along with the comparative examples.

Prior to examples and comparative examples, the following materials were prepared.

### EPDM

Esprene 532 produced by Sumitomo Chemical Co., Ltd. (iodine value: 12, ethylene content: 51 % by weight)

### EPM

Esprene 201 produced by Sumitomo Chemical Co., Ltd. (iodine value: 0, ethylene content: 49 % by weight)

### Peroxide crosslinking agent

Dicumyl peroxide (Percumyl D-40 produced by NOF Corporation)

### Filler having a laminar crystal structure

Clay (Barges KE produced by Barges Pigments Co.)

### Filler having a laminar crystal structure

Kaolinite (Hardtop Clay-S produced by Shiraishi Calcium Co., Ltd.)

### Filler having a laminar crystal structure

Mica (Suzolight Mica produced by Marietta Co.)

### Filler having a laminar crystal structure

Talc (Mistlon Vapor Talc produced by Nippon Mistlon Co., Ltd.)

### Filler having a laminar crystal structure

Hydrotalcite compound (DHT-4A produced by Kyowa Chemical Co., Ltd.

### Epoxy resin ①

Bisphenol A diglycidyl ether (Epicoat 828 produced by Yuka Shell Epoxy Co., Ltd.)

### Epoxy resin ②

Trimethylpropane triglycidyl ether (Epiall TMP-100 produced by NOF Corporation)

### Epoxy resin ③

Alicyclic diepoxide (Epiall D-126 produced by NOF Corporation)

### Quinoline antioxidant

Trimethyl dihydroquilonine (Nonflex RD produced by Seiko Chemical Co., Ltd.)

### Phenylamine antioxidant

N-phenyl-N'-isopropyl-p-phenylenediamine (Ozonone 3C produced by Seiko Chemical Co., Ltd.)

### Filler

Carbon black (Asahi No. 52 produced by Asahi Carbon Co., Ltd.)

### Paraffinic oil

Diana Process PW-380 produced by Idemitsu Co., Ltd.

### Examples 1 to 17 and Comparative Examples 1 to 4

Rubber compositions were each prepared by blending ingredients in proportions as shown in Tables 1 to 4, and kneading the resulting mixture by means of a Banbury mixer and a roll. The thus obtained rubber compositions were each press vulcanized at 160°C for 45 minutes so as to be formed into a rubber sheet of 2 mm thickness.

**Table 1**

| (Parts) | | | | | | |
|---|---|---|---|---|---|---|
| | Examples | | | | | |
| | 1 | 2 | 3 | 4 | 5 | 6 |
| EPDM | 100 | - | 50 | 100 | 100 | 100 |
| EPM | - | 100 | 50 | - | - | - |
| Peroxide crosslinking agent | 6 | 6 | 6 | 6 | 6 | 6 |
| Clay | 75 | 75 | 75 | 75 | 75 | 75 |
| Kaolinite | - | - | - | - | - | - |
| Mica | - | - | - | - | - | - |
| Talc | - | - | - | - | - | - |
| Hydrotalcite compound | - | - | - | - | - | - |
| Epoxy resin ① | 5 | 5 | 5 | - | - | 1.5 |
| Epoxy resin ② | - | - | - | 5 | - | - |
| Epoxy resin ③ | - | - | - | - | 5 | - |
| Quinoline antioxidant | - | - | - | - | - | - |
| Phenylamine antioxidant | - | - | - | - | - | - |
| Carbon black | 100 | 100 | 100 | 100 | 100 | 100 |
| Paraffinic oil | 60 | 60 | 60 | 60 | 60 | 60 |

**Table 2**

| (Parts) | | | | | | |
|---|---|---|---|---|---|---|
| | Examples | | | | | |
| | 7 | 8 | 9 | 10 | 11 | 12 |
| EPDM | 100 | 100 | 100 | 100 | 100 | 100 |
| EPM | - | - | - | - | - | - |
| Peroxide crosslinking agent | 6 | 6 | 6 | 6 | 6 | 6 |
| Clay | 75 | 20 | 130 | - | - | - |
| Kaolinite | - | - | - | 75 | - | - |
| Mica | - | - | - | - | 75 | - |
| Talc | - | - | - | - | - | 75 |
| Hydrotalcite compound | - | - | - | - | - | - |
| Epoxy resin ① | 15 | 5 | 5 | 5 | 5 | 5 |
| Epoxy resin ② | - | - | - | - | - | - |
| Epoxy resin ③ | - | - | - | - | - | - |
| Quinoline antioxidant | - | - | - | - | - | - |
| Phenylamine antioxidant | - | - | - | - | - | - |
| Carbon black | 100 | 100 | 100 | 100 | 100 | 100 |
| Paraffinic oil | 60 | 60 | 60 | 60 | 60 | 60 |

**Table 3**

| (Parts) | | | | | |
|---|---|---|---|---|---|
| | Examples | | | | |
| | 13 | 14 | 15 | 16 | 17 |
| EPDM | 100 | 100 | 100 | 100 | 100 |
| EPM | - | - | - | - | - |
| Peroxide crosslinking agent | 6 | 6 | 6 | 6 | 6 |
| Clay | - | 75 | 75 | 75 | 75 |
| Kaolinite | - | - | - | - | - |
| Mica | - | - | - | - | - |
| Talc | - | - | - | - | - |
| Hydrotalcite compound | 75 | - | - | - | - |
| Epoxy resin ① | 5 | 5 | 5 | 5 | 5 |
| Epoxy resin ② | - | - | - | - | - |
| Epoxy resin ③ | - | - | - | - | - |
| Quinoline antioxidant | - | - | - | 0.5 | 10 |
| Phenylamine antioxidant | - | 4 | 4 | - | - |
| Carbon black | 100 | 100 | 100 | 100 | 100 |
| Paraffinic oil | 60 | 60 | 60 | 60 | 60 |

**Table 4**

| (Parts) | | | | |
|---|---|---|---|---|
| | Comparative Examples | | | |
| | 1 | 2 | 3 | 4 |
| EPDM | 100 | 100 | 100 | 100 |
| EPM | - | - | - | - |
| Peroxide crosslinking agent | 6 | 6 | 6 | 6 |
| Clay | 75 | 75 | 10 | 140 |
| Kaolinite | - | - | - | - |
| Mica | - | - | - | - |
| Talc | - | - | - | - |
| Hydrotalcite compound | - | - | - | - |
| Epoxy resin ① | - | 20 | 5 | 5 |
| Epoxy resin ② | - | - | - | - |
| Epoxy resin ③ | - | - | - | - |
| Quinoline antioxidant | - | - | - | - |
| Phenylamine antioxidant | - | - | - | - |
| Carbon black | 100 | 100 | 100 | 100 |
| Paraffinic oil | 60 | 60 | 60 | 60 |

Evaluation tests for the following properties were performed on each of Examples 1 to 17 and Comparative Examples 1 to 4 thus produced, and the results are shown in the following Tables 5 to 8.

### Kneading processability

When kneading rubber compositions, each prepared by blending ingredients in proportions as shown in Tables 1 to 4, by means of a Banbury mixer (A kneading) and a roll (B kneading), kneading processability was evaluated on each of Examples 1 to 17 and Comparative Examples 1 to 4. In Tables 5 to 8, a symbol × indicates that kneading processability was bad due to tackiness of materials, a symbol Δ indicates that kneading processability was slightly poor, and a symbol ○ indicates that kneading processability was excellent.

### Dry Physical Properties

From each rubber sheet, a dumbbell specimen of No. 5 stipulated by JIS (Japanese Industrial Standards) was punched out and put to use in determining the tensile strength (TB), elongation (EB) and hardness (HA) according to JIS K 6251. Both the tensile strength (TB) and the elongation (EB) are better for the purposes of the present invention as their respective values are higher. Good values of the hardness (HA) for the purposes of the present invention are in the range of 60 to 75 (points).

### Heat resistance

After each rubber sheet was thermally aged at 165°C for 240 hours, a dumbbell specimen of No. 5 stipulated by JIS (Japanese Industrial Standards) was punched out from thus obtained rubber sheet and put to use in determining the tensile strength (TB), elongation (EB) and hardness (HA) according to JIS K 6251. Each specimen was visually evaluated on its appearance after being stretched whether abnormalities such as break occurred. In Tables 5 to 8, a symbol ○ indicates that no abnormalities were found and a symbol × indicates that some abnormalities were found. In the case that the aging time was changed to 480 hours, tensile strength (TB), elongation (EB) and hardness (HA) were determined in the same condition as the above, and also each specimen was visually evaluated on its appearance after being stretched.

### Compression set

Deformation ratio (%) for each rubber sheet was determined in conditions of a temperature of 175°C, a time of 24 hours and a deformation ratio of 25% in accordance with JIS K 6262.

### Volume resistivity, surface resistivity and alternating electrical current (AC) resistance

The volume resistivity and surface resistivity of each rubber sheet were determined according to JIS K 6911. The AC resistance (impedance) on flow of an alternating electrical current of 10⁴ Hz was also determined according to JIS C 1102-6. The volume resistivity, surface resistivity and AC resistance (impedance) are better for the purposes of the present invention as their respective values are higher.

### Electrical Conductivity

Each rubber sheet was first degreased with alcohol, weighed to 50 g and placed in a hermetic container made of PTFE (polytetrafluoroethylene). Then, 250 ml of a solvent (pure water) was poured into the container, and heat treatment was performed at 100°C for 168 hours, followed by cooling to room temperature (25°C). Then, the electrical conductivity of the solvent (pure water) was measured by a conductivity meter (a pH meter of Kastani ACT D24 manufactured by Horiba, Ltd.). Lower values of electrical conductivity are better for the purposes of the present invention.

### Metal Ion Concentration

Each rubber sheet was first degreased with alcohol, weighed to 50 g and placed in a hermetic container made of PTFE (polytetrafluoroethylene). Then, 250 ml of a solvent (pure water) was poured into the container, and heat treatment was performed at 100°C for 168 hours, followed by cooling to room temperature (25°C). The metal ion concentration in the solvent was measured by ICP emission spectroscopy. This concentration is better for the purposes of the present invention as its values are lower.

**Table 5**

| | Examples | | | | | |
|---|---|---|---|---|---|---|
| | 1 | 2 | 3 | 4 | 5 | 6 |
| Kneading processability | | | | | | |
| Banbury (A kneading) | ○ | ○ | ○ | ○ | ○ | ○ |
| Roll (B kneading) | ○ | ○ | ○ | ○ | ○ | ○ |
| Dry physical properties | | | | | | |
| TB (MPa) | 13.1 | 12.4 | 12.9 | 12.8 | 12.5 | 11.5 |
| EB (%) | 410 | 420 | 390 | 420 | 430 | 490 |
| HA (Point) | 72 | 71 | 71 | 72 | 71 | 68 |
| Heat resistance (165°C x 240 hours) | | | | | | |
| TB (MPa) | 9.9 | 9.1 | 9.3 | 9.7 | 9 | 7.8 |
| EB (%) | 200 | 210 | 200 | 190 | 180 | 190 |
| HA (Point) | 80 | 80 | 79 | 80 | 79 | 78 |
| Visual appearance after being stretched | ○ | ○ | ○ | ○ | ○ | ○ |
| Heat resistance (165°C x 480 hours) | | | | | | |
| TB (MPa) | 6.2 | 5.6 | 5.8 | 6.1 | 6 | 4.9 |
| EB (%) | 100 | 100 | 100 | 100 | 100 | 80 |
| HA (Point) | 85 | 84 | 84 | 85 | 85 | 85 |
| Visual appearance after being stretched | ○ | ○ | ○ | ○ | ○ | ○ |
| Compression set (%) | 42 | 45 | 43 | 45 | 44 | 49 |
| Volume resistivity ( Ω · cm) | 5x10¹¹ | 6x10¹¹ | 4x10¹¹ | 2x10¹¹ | 6x10¹¹ | 2x10¹¹ |
| Surface resistivity (Ω) | 4x10¹² | 6x10¹² | 2x10¹² | 2x10¹² | 1x10¹³ | 5x10¹² |
| AC resistance (Ω· cm) | 5x10¹⁰ | 4x10¹⁰ | 4x10¹⁰ | 1x10¹⁰ | 8x10¹⁰ | 1x10¹⁰ |
| Extraction | | | | | | |
| Electrical conductivity (µS/cm) | 14.8 | 15.2 | 15.1 | 16.2 | 15.2 | 14.1 |
| Metal ion concentration (ppm) | 0.28 | 0.29 | 0.28 | 0.31 | 0.26 | 0.26 |
| Overall evaluation | ○ | ○ | ○ | ○ | ○ | ○ ∼ Δ |

**Table 6**

| | Examples | | | | | |
|---|---|---|---|---|---|---|
| | 7 | 8 | 9 | 10 | 11 | 12 |
| Kneading processability | | | | | | |
| Banbury (A kneading) | ○ | ○ | ○ | ○ | ○ | ○ |
| Roll (B kneading) | Δ | ○ | ○ | ○ | ○ | ○ |
| Dry physical properties | | | | | | |
| TB (MPa) | 10.8 | 14.2 | 9.9 | 13.2 | 12.4 | 13 |
| EB (%) | 340 | 360 | 500 | 430 | 440 | 390 |
| HA (Point) | 66 | 68 | 75 | 70 | 72 | 72 |
| Heat resistance (165°C x 240 hours) | | | | | | |
| TB (MPa) | 8.2 | 9.4 | 9.8 | 9.8 | 9.5 | 9.8 |
| EB (%) | 200 | 180 | 260 | 220 | 230 | 190 |
| HA (Point) | 73 | 75 | 81 | 77 | 80 | 80 |
| Visual appearance after being stretched | ○ | ○ | ○ | ○ | ○ | ○ |
| Heat resistance (165°C x 480 hours) | | | | | | |
| TB (MPa) | 6.8 | 5.9 | 6.8 | 5.9 | 6.2 | 6.2 |
| EB (%) | 120 | 100 | 120 | 100 | 110 | 100 |
| HA (Point) | 80 | 80 | 84 | 80 | 85 | 85 |
| Visual appearance after being stretched | ○ | ○ | ○ | ○ | ○ | ○ |
| Compression set (%) | 52 | 36 | 57 | 45 | 42 | 42 |
| Volume resistivity (Ω · cm) | 9x10¹¹ | 5x10⁷ | 9x10¹² | 2x10¹¹ | 2x10¹¹ | 4x10¹¹ |
| Surface resistivity (Ω) | 1x10¹³ | 4x10⁸ | 8x10¹³ | 4x10¹² | 1x10¹² | 2x10¹² |
| AC resistance (Ω·cm) | 8x10¹⁰ | 3x10⁴ | 4x10¹¹ | 1x10¹⁰ | 1x10¹⁰ | 2x10¹⁰ |
| Extraction | | | | | | |
| Electrical conductivity (µS/cm) | 15.6 | 14.5 | 18.1 | 10.5 | 15.3 | 15.6 |
| Metal ion concentration (ppm) | 0.31 | 0.12 | 0.39 | 0.25 | 0.3 | 0.32 |
| Overall evaluation | ○ ∼ Δ | ○ | ○ ∼ Δ | ○ | ○ | ○ |

**Table 7**

| | Examples | | | | |
|---|---|---|---|---|---|
| | 13 | 14 | 15 | 16 | 17 |
| Kneading processability | | | | | |
| Banbury (A kneading) | ○ | ○ | ○ | ○ | ○ |
| Roll (B kneading) | ○ | ○ | ○ | ○ | ○ |
| Dry physical properties | | | | | |
| TB (MPa) | 11.9 | 11.8 | 11.9 | 13.4 | 10.1 |
| EB (%) | 390 | 440 | 440 | 400 | 520 |
| HA (Point) | 72 | 70 | 70 | 71 | 65 |
| Heat resistance (165°C x 240 hours) | | | | | |
| TB (MPa) | 10.4 | 10 | 9.9 | 9.8 | 8.8 |
| EB (%) | 240 | 220 | 220 | 200 | 260 |
| HA (Point) | 80 | 77 | 77 | 78 | 71 |
| Visual appearance after being stretched | ○ | ○ | ○ | ○ | ○ |
| Heat resistance (165°C x 480 hours) | | | | | |
| TB (MPa) | 5.8 | 6.1 | 6.1 | 6.6 | 5.8 |
| EB (%) | 160 | 130 | 130 | 110 | 140 |
| HA (Point) | 82 | 83 | 82 | 83 | 78 |
| Visual appearance after being stretched | ○ | ○ | ○ | ○ | ○ |
| Compression set (%) | 42 | 46 | 47 | 42 | 59 |
| Volume resistivity ( Ω · cm) | 5x10¹¹ | 3x10¹¹ | 5x10¹¹ | 5x10¹¹ | 5x10¹¹ |
| Surface resistivity (Ω) | 3x10¹² | 4x10¹² | 5x10¹² | 4x10¹² | 4x10¹² |
| AC resistance (Ω· cm) | 3x10¹⁰ | 1x10¹⁰ | 4x10¹⁰ | 4x10¹⁰ | 3x10¹⁰ |
| Extraction | | | | | |
| Electrical conductivity (µS/cm) | 16.2 | 16.8 | 17 | 15.2 | 18.9 |
| Metal ion concentration (ppm) | 0.36 | 0.31 | 0.32 | 0.3 | 0.35 |
| Overall evaluation | ○ | ○ | ○ | ○ | ○ ∼ Δ |

**Table 8**

| | Comparative Examples | | | |
|---|---|---|---|---|
| | 1 | 2 | 3 | 4 |
| Kneading processability | | | | |
| Banbury (A kneading) | ○ | ○ | ○ | ○ |
| Roll (B kneading) | ○ | × | ○ | ○ |
| Dry physical properties | | | | |
| TB (MPa) | 12.4 | 10.1 | 14.4 | 8.5 |
| EB (%) | 480 | 280 | 380 | 540 |
| HA (Point) | 68 | 64 | 68 | 75 |
| Heat resistance (165°C x 240 hours) | | | | |
| TB (MPa) | 8.2 | 8.8 | 10.2 | 7.5 |
| EB (%) | 170 | 170 | 170 | 260 |
| HA (Point) | 78 | 73 | 75 | 82 |
| Visual appearance after being stretched | ○ | ○ | ○ | ○ |
| Heat resistance (165°C x 480 hours) | | | | |
| TB (MPa) | 3.8 | 6.8 | 4.5 | 4.5 |
| EB (%) | 50 | 110 | 100 | 120 |
| HA (Point) | 85 | 80 | 81 | 85 |
| Visual appearance after being stretched | × | ○ | ○ | ○ |
| Compression set (%) | 42 | 45 | 32 | 62 |
| Volume resistivity ( Ω · cm) | 5x10¹¹ | 6x10¹¹ | 4x10⁶ | 1x10¹³ |
| Surface resistivity (Ω) | 4x10¹² | 6x10¹² | 5x10⁷ | 9x10¹³ |
| AC resistance (Ω· cm) | 5x10¹⁰ | 4x10¹⁰ | 5x10³ | 6x10¹¹ |
| Extraction | | | | |
| Electrical conductivity (µS/cm) | 14.8 | 15.2 | 9.8 | 20.4 |
| Metal ion concentration (ppm) | 0.28 | 0.29 | 0.14 | 0.6 |
| Overall evaluation | × | × | × | × |

### Overall Evaluation

As is clear from the tabulated results, all of the Examples according to the present invention are excellent in heat resistance, good in electrical resistance and have a low metal ion concentration. Therefore, the Examples are optimum for use in a transport pipe for a fuel cell system, a cooling liquid-transport pipe for a super computer, a membrane cleaning liquid-transport pipe for an analytical instrument, and a chip or wafer cleaning liquid-transport pipe for semiconductor production.

On the contrary, since epoxy resin was not included in Comparative Example 1, an abnormality such as a break occurred after 480 hours thermal aging, which shows inferiority in heat resistance. Since the amount of the epoxy resin was higher than the upper limit in Comparative Example 2, it is thought that tackiness is high, roll moldability is inferior and Mooney Viscosity is low so as to cause permanent set in extrusion molding. Since the amount of clay (a filler having a laminar crystal structure) was lower than the lower limit in Comparative Example 3, volume resistivity, surface resistivity, alternating electrical current (AC) resistance and electrical conductivity were small, which shows inferiority in electrical resistance. Since the amount of clay (a filler having a laminar crystal structure) was higher than the upper limit in Comparative Example 4, initial tensile strength at break (TB) was low and extraction resistance is slightly inferior.

As mentioned above, since the rubber composition of the present invention includes the ethylene-propylene rubber (component A) and the peroxide crosslinking agent (component B), the hose which is formed from the rubber composition can more reliably alleviate ion extraction with respect to a fluid passing through the hose. Further, since the inventive rubber composition includes the filler having a laminar crystal structure (component C) at a specific ratio, the ions may be entrapped between the layers of the above-mentioned laminar crystal structure of the filler and can even more reliably alleviate ion extraction with respect to a fluid passing through the hose. Still further, since the inventive rubber composition includes the epoxy resin (component D) at a specific ratio, heat resistance is remarkably improved. Even still further, the inventive rubber composition is mainly formed from the ethylene-propylene rubber (component A), the material cost is inexpensive compared with silicone rubber or SUS material and also processing cost is inexpensive. When silicone rubber is used, the amount of the filler should be limited in order to secure physical properties such as hardness or modulus, which narrowed the scope of variation for adjustment in compounding thereof. However, since the inventive rubber composition is mainly formed from the ethylene-propylene rubber (component A), the amount of filler can be increased, which may widen the scope of variation for adjustment in compounding thereof in view of hardness, modulus and the like. Since the ethylene-propylene rubber (component A) such as EPDM has good mold releasability, the ethylene-propylene rubber may easily be released from a roll. Then, since the epoxy resin (component D) is included, the epoxy resin works as a tackifier so that kneading processability of the rubber composition can be improved.

When electrical conductivity, metal ion concentration, volume resistivity, surface resistivity and alternating electrical current (AC) resistance (impedance) are respectively within specific ratios in the low-contaminative hose formed from the inventive rubber composition, the low-contaminative hose can more reliably alleviate ion extraction with respect to a fluid passing through the hose so as to prevent contamination due to ions and the like effectively and has excellent electrical resistance so as to satisfy the requirements for such use as in a transport pipe for a fuel cell system, a cooling liquid-transport pipe for a super computer, a membrane cleaning liquid-transport pipe for an analytical instrument, and a chip or wafer cleaning liquid-transport pipe for semiconductor production.

The features disclosed in the foregoing description and in the claims may, both separately and in any combination thereof, be material for realising the invention in diverse forms thereof.

## Claims

1. A rubber composition comprising:
(A) an ethylene-propylene rubber;
(B) a peroxide crosslinking agent;
(C) a filler having a laminar crystal structure; and
(D) an epoxy resin:
wherein the filler (C) is present in a proportion of 20 to 130 parts by weight and the epoxy resin (D) is present in a proportion of 1.5 to 15 parts by weight, respectively, based on 100 parts by weight of the ethylene-propylene rubber (A).

2. A rubber composition as set forth in Claim 1,
further comprising at least one antioxidant selected from quinoline and phenylamine.

3. A rubber composition as set forth in Claim 2,
wherein the antioxidant is present in a proportion of 0.5 to 10 parts by weight based on 100 parts by weight of the ethylene-propylene rubber (A).

4. A low-contaminative hose produced by using a rubber composition as set forth in any one of Claim 1 to Claim 3.

5. A low-contaminative hose as set forth in Claim 4,
wherein the electrical conductivity of a solvent is 20 µS/cm or less when the hose is extracted using pure water as the solvent.

6. A low-contaminative hose as set forth in Claim 4 or Claim 5, wherein the metal ion concentration in a solvent is 0.5 ppm or less when the hose is extracted using pure water as the solvent.

7. A low-contaminative hose as set forth in any one of Claim 4 to Claim 6, which has a volume resistivity of 10⁷ Ω·cm or more.

8. A low-contaminative hose as set forth in any one of Claim 4 to Claim 7, which has a surface resistivity of 10⁸ Ω or more.

9. A low-contaminative hose as set forth in any one of Claim 4 Claim 8, which has an alternating electrical current resistance (impedance) of 10⁴ Ω·cm or more on flow of an alternating electrical current of 10⁴ Hz.
